# EUROPÄISCHE PATENTSCHRIFT

(11) **EP 2 330 955 B1**
(45) Veröffentlichungstag und Bekanntmachung des Hinweises auf die Patenterteilung: **19.09.2012**
(21) Anmeldenummer: 09780935.4
(22) Anmeldetag: 22.07.2009
(51) Int. Cl.: A47J 43/046, A47J 43/08

(54) **KÜCHENMASCHINE MIT EINER WÄGEEINRICHTUNG UND VERFAHREN ZUM BETREIBEN EINER KÜCHENMASCHINE**
KITCHEN APPLIANCE WITH A SCALE DEVICE AND METHOD FOR OPERATING A KITCHEN APPLIANCE
ROBOT MÉNAGER ÉQUIPÉ D UN DISPOSITIF DE PESÉE ET PROCÉDÉ POUR FAIRE FONCTIONNER UN ROBOT MÉNAGER

(30) Priorität: 25.07.2008 DE 102008040743
(43) Veröffentlichungstag der Anmeldung: 15.06.2011
(73) Patentinhaber: BSH Bosch und Siemens Hausgeräte GmbH, 81739 München (DE)
(72) Erfinder: PACNIK, Roman, 2383 Smartno pri Slovenj Gradcu (SI); POGACAR, Toni, 3311 Sempeter (SI)
(86) Internationale Anmeldenummer: PCT/EP2009/059436
(87) Internationale Veröffentlichungsnummer: WO 2010/010125

(56) Entgegenhaltungen:
- EP-A- 1 650 850
- DE-U1- 8 905 567

## Beschreibung

Die Erfindung betrifft eine Küchenmaschine mit einem mit mehreren Füßen ausgebildeten Basisteil, an welchem ein Behälter zur Aufnahme von Lebensmitteln anbringbar ist, und mit einer Wägeeinrichtung mit mehreren Sensoren zur Gewichtsbestimmung zumindest des Behälters. Des Weiteren betrifft die Erfindung auch ein Verfahren zum Betreiben einer Küchenmaschine mit einem mit mehreren Füßen ausgebildeten Basisteil, an welchem ein Behälter zur Aufnahme von Lebensmitteln anbringbar ist, und mit einer Wägeeinrichtung mit mehreren Sensoren zur Gewichtsbestimmung zumindest des Behälters.

Küchenmaschinen mit integrierten Wägeeinrichtungen sind bekannt, wobei beispielsweise die DE 89 05 567 U1 eine Küchenmaschine mit einer integrierten Wägeeinrichtung aufweist, bei der Messaufnehmer an den Füßen der Küchenmaschine angeordnet sind. Darüber hinaus ist aus der EP 1 650 850 A2 ein Antriebssystem für den Gebrauch bei Hausgeräten bekannt, welches zur Unwuchtbestimmung ausgebildet ist.

Es ist Aufgabe der vorliegenden Erfindung, eine Küchenmaschine zu schaffen, welche in ihrer Funktionalität verbessert werden kann, ohne den Aufwand wesentlich zu erhöhen. Darüber hinaus soll ein Verfahren geschaffen werden, mit welchem eine Küchenmaschine im Hinblick auf ihren Betrieb funktioneller gestaltet werden kann.

Diese Aufgaben werden durch eine Küchenmaschine, welche die Merkmale nach Anspruch 1 aufweist und ein Verfahren welches die Merkmale nach Anspruch 12 aufweist, gelöst.

Eine erfindungsgemäße Küchenmaschine umfasst ein Basisteil, an welchem mehrere Füße angeordnet sind. Darüber hinaus umfasst die Küchenmaschine einen Behälter zur Aufnahme von Lebensmitteln, welcher an dem Basisteil anbringbar ist. Ferner umfasst die Küchenmaschine auch eine Wägeeinrichtung mit mehreren Sensoren zur Gewichtsbestimmung zumindest des Behälters und gegebenenfalls des in dem Behälter enthaltenen Lebensmittels. Die Wägeeinrichtung ist in ihrer Funktionalität so ausgestaltet dass sie neben ihrer grundlegenden Funktion der Gewichtsbestimmung auch zumindest in der Phase der Zubereitung des Lebensmittels in dem Behälter zur Bestimmung von Unwuchtinformationen zumindest einer Komponente der Küchenmaschine ausgebildet ist. Es kann somit eine Küchemaschine geschaffen werden, welche in ihrer Funktionalität deutlich verbessert ist, da die Wägeeinrichtung multifunktional ausgestaltet ist. Somit ist es möglich, dass durch allenfalls einen geringen zusätzlichen Geräteaufwand ein hochfunktionales System geschaffen wird, welches durch eine einzige Komponente, nämlich die Wägeeinrichtung, verschiedenste Funktionen vereint.

Die Küchenmaschine kann auch zumindest zwei Behälter zu Aufnahme von Lebensmitteln umfassen.

Vorzugsweise ist als Unwuchtinformation ein Vibrieren des Behälters und/oder eine hochunsymmetrische Verteilung des Lebensmittel in dem Behälter bestimmbar. Es kann auch vorgesehen eine Unwucht eines Antriebsmotors, insbesondere von einem Rührwerk, bestimmbar ist.

Unter der Phase der Zubereitung des Lebensmittels in dem Behälter wird beispielsweise der Zustand verstanden, bei dem ein Rührwerk aktiviert ist und das Lebensmittel in dem Behälter bewegt wird. Gerade dadurch können sich Gewichtsverteilungen ergeben, zu einem Vibrieren des Behälters oder zu unsymmetrischen Gewichtsverteilungen führen.

Da diese beispielhaft genannten Unwuchtfälle für den Betrieb der Küchenmaschine unerwünscht sind, sollen diese frühzeitig erkannt und korrigiert werden können, um den Verschleiß der Küchenmaschine nicht unnötig voranzutreiben. Nicht zuletzt kann durch diese Detektion der Unwuchtinformation auch der Zubereitungsvorgang für das Lebensmittel verbessert werden.

Vorzugsweise ist die Funktion der Bestimmung von Unwuchtinformationen betriebsphasenabhängig aktiviert. Dies bedeutet, dass diese Funktionalität nur dann möglich ist, wenn sie auch vorteilhaft benötigt wird, so dass eine nicht permanente Aktivierung dieser Funktion auch einen energiesparenden Betrieb der Küchenmaschine gewährleistet.

Insbesondere ist die Funktion der Bestimmung von Unwuchtinformationen in der Phase, in der ein Rührwerk der Küchenmaschine aktiviert ist, möglich. Denn gerade dann, wenn durch ein derartiges Rührwerk die Lebensmittel in dem Behälter bewegt werden und somit unsymmetrische Gewichtsverteilungen auftreten können, können auch diese Unwuchtgegebenheiten auftreten.

Insbesondere ist die Funktion der Bestimmung von Unwuchtinformationen dann bei deaktiviertem Rührwerk auch deaktiviert.

Vorzugsweise umfasst die Küchenmaschine eine Steuereinheit, welche derart ausgebildet ist, dass abhängig von einem Überschreiten von Differenzwerten zumindest einer Unwuchtinformation die Drehgeschwindigkeit des Rührwerks reduziert wird. Durch diese Ausgestaltung kann quasi eine automatische sich selbst regulierende Betriebsweise der Küchenmaschine ermöglicht werden, so dass bei unerwünschten Unwuchtsituationen die Küchenmaschine selbst eingreift und die Drehzahl reduziert, wodurch dadurch auch üblicherweise die Unwucht vermindert werden kann.

Vorzugsweise umfasst die Küchenmaschine eine Steuereinheit, welche derart ausgebildet ist, dass abhängig von einem Überschreiten von Referenzwerten zumindest einer Unwuchtinformation ein Warnsignal erzeugt wird. Dies kann dem Nutzer der Küchenmaschine frühzeitig anzeigen, dass derartige Unwuchtsituationen gegeben sind, wobei in diesem Zusammenhang beispielsweise ein akustisches und/oder ein optisches Signal erzeugt werden kann. Auch dann, wenn die Küchenmaschine somit nicht zur selbstregulierenden Kompensation von Unwuchtsituationen ausgebildet ist, kann einem Nutzer gleichzeitig der Hinweis gegeben werden, dass entsprechende Maßnahmen gegen die aufgetretene Unwucht eingeleitet werden sollen.

Vorzugsweise ist ein Rührwerk der Küchenmaschine abhängig von der Zeitdauer, wie lange zumindest ein Referenzwert zumindest einer Unwuchtinformation überschritten ist, deaktivierbar. Durch diese Ausgestaltung, können kurzzeitige und unschädliche Unwuchtsituationen ohne einen Betriebseingriff auf die Küchenmaschine abgewartet werden, so dass der Zubereitungsvorgang der Lebensmittel nicht unnötigerweise verzögert wird. Erst dann, wenn diese Überschreitung der Referenzwerte länger als eine vorgebbare Zeitdauer anhält, ist dann die Deaktivierung des Rührwerks vorgesehen.

Vorzugsweise ist vorgesehen, dass bei Auftreten unerwünschter Unwuchtsituationen ein Warnsignal an den Nutzer der Küchenmaschine abgebbar ist und dann, wenn nach Erzeugen dieses Warnsignals eine weitere vorgebbare Zeitdauer die Unwuchtsituation weiterhin besteht und kein aktiver Eingriff des Nutzers, beispielsweise durch Reduzieren der Geschwindigkeit des Rührwerks durchgeführt wurde, diese Reduzierung der Geschwindigkeit des Rührwerks automatisch durch die Küchenmaschine selbst erfolgt oder gegebenenfalls eine vollständige Abschaltung der Küchenmaschine automatisch durchgeführt wird.

Vorzugsweise ist jeweils ein Sensor jeweils in einem Fuß der Küchenmaschine zumindest bereichsweise angeordnet. Die kompakte und verschleißarme Anordnung der Sensoren kann dadurch gewährleistet werden.

Vorzugsweise sind die Sensoren der Wägeeinrichtung multifunktional ausgestaltet und zur Detektion des Gewichts des Behälters und zur Detektion der Unwuchtinformationen ausgebildet. Es kann auch vorgesehen sein, dass die Wägeeinrichtung Sensoren zur Gewichtsdetektion aufweist und Sensoren zur Unwuchtdetektion umfasst, wobei die Sensoren jeweils nur die eine Funktion aufweisen.

Die Sensoren können an der Wägeeinrichtung oder an der Komponente, von der die Unwucht bestimmt werden soll, angeordnet sein. Insbesondere kann daher zumindest ein Sensor beispielsweise an einem Antriebsmotor oder einem Rührwerk angeordnet sein. Ebenso kann zumindest ein Sensor an dem Basisteil der Küchenmaschine angeordnet sein.

Vorzugsweise umfasst die Küchenmaschine zumindest drei Füße, insbesondere nur drei Füße, welche an dem Basisteil angeordnet sind, wobei in jedem Fuß ein Sensor der Wägeeinrichtung zumindest bereichsweise angeordnet ist. Insbesondere ist vorgesehen, dass die drei Füße in einem Dreieck insbesondere in einem gleichschenkeligen Dreieck an der Unterseite des Basisteils angeordnet sind. Dies ermöglicht im Hinblick auf die duale Funktionalität der Gewichtsermittlung einerseits und der Detektion von Unwuchtinformationen andererseits eine besonders geeignete Ausgestaltung. Denn zum einen kann dadurch auch eine präzise Gewichtserfassung dadurch ermöglicht werden, dass auch bei nicht zentriert aufgestelltem Behälter die genaue Gewichtsermittlung möglich ist, und andererseits auch ausreichende Informationen über Unwuchtzustände gewährleistet werden kann.

Bei einem erfindungsgemäßen Verfahren zum Betreiben einer Küchenmaschine mit einem mit mehreren Füßen ausgebildeten Basisteil, an welchem ein Behälter zur Aufnahme von Lebensmitteln anbringbar ist, und die Küchenmaschine eine Wägeeinrichtung mit mehreren Sensoren zur Gewichtsbestimmung zumindest des Behälters umfasst, werden zumindest in der Phase der Zubereitung des Lebensmittels in dem Behälter Unwuchtinformationen zumindest einer Komponente der Küchenmaschine mittels der Wägeeinrichtung bestimmt. Eine hochfunktionelle Betriebsweise kann dadurch mittels einer multifunktionellen ausgebildeten Wägeeinrichtung ermöglicht werden.

Vorzugsweise wird die Funktion der Bestimmung von Unwuchtinformationen abhängig von Betriebsphasen der Küchenmaschine, insbesondere einem Rührwerk, aktiviert.

Vorteilhafte Ausgestaltungen der erfindungsgemäßen Küchenmaschine sind als vorteilhafte Ausführungen des erfindungsgemäßen Verfahrens anzusehen.

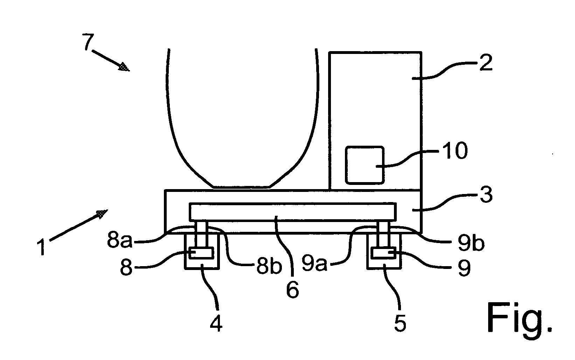

Ein Ausführungsbeispiel der Erfindung wird nachfolgend anhand einer schematischen Zeichnung näher erläutert. Die einzige Figur zeigt eine skizzenhafte und beispielhafte Seitenansicht einer Küchenmaschine.

Die Küchenmaschine 1 umfasst ein Bedienteil 2, an dem eine Mehrzahl von Bedienelementen, wie Knöpfe und dergleichen angeordnet sein können. Darüber hinaus kann an dieser Komponente auch eine Anzeigeeinheit vorgesehen sein.

Des Weiteren umfasst die Küchenmaschine 1 ein Basisteil 3, an welchem das Bedienteil 2 angeordnet ist. Die Bedienelemente können auch am Basisteil 3 angeordnet sein. Es kann auch vorgesehen sein, dass das Bedienteil 2 nicht vorhanden ist und die darin angeordneten Elemente in dem Basisteil 3 angeordnet sind.

An der Unterseite des Basisteils 3 sind im Ausführungsbeispiel drei Füße, von denen die beiden Füße 4 und 5 dargestellt sind, angeordnet. Die Küchenmaschine 1 kann über diese Füße 4 und 5 auf einem Unterteil, beispielsweise einer Arbeitsplatte oder dergleichen abgestellt sein.

Vorzugsweise sind die drei Füße 4, 5 in einem gleichschenkeligen Dreieck an der Unterseite des Basisteils 3 angeordnet.

Die Küchenmaschine 1 ist zum Zubereiten von Lebensmitteln, welche in einen Behälter 7 einbringbar sind, ausgebildet. Dazu umfasst die Küchenmaschine 1 ein nicht gezeigtes Rührwerk, mittels welchem die in dem Behälter 7 eingebrachten Lebensmittel gemixt, geknetet, gerührt etc., werden können.

Der Behälter 7 ist auf dem Basisteil 3 anbringbar bzw. aufstellbar. Er kann auch auf dem Bedienteil 2 aufgestellt sein.

Die Küchenmaschine 1 umfasst darüber hinaus eine Wägeeinrichtung 6, welche mit Teilkomponenten in dem Basisteil 3 angeordnet ist.

Die Wägeeinrichtung 6 umfasst eine Mehrzahl von Sensoren, wobei jeweils ein Sensor in einem Fuß 4, 5 angeordnet ist. In der Figur sind die beiden Sensoren 8 und 9 dargestellt, wobei der Sensor 8 in dem Fuß 4 und der Sensor 9 in dem Fuß 5 angeordnet ist.

Jeder der Sensoren 8 und 9 umfasst zumindest elektrische Kontakte 8a und 8b bzw. 9a und 9b, welche sich aus den Füßen 4, 5 herauserstrecken und mit Kontakten des Teils der Wägeeinrichtung 6, das in dem Basisteil 3 angeordnet ist, elektrisch verbunden sind. Vorzugsweise weist jeder Sensor 8 bzw. 9 vier elektrische Kontakte auf, wodurch eine Wheatstonesche Brücke realisiert werden kann. Dies sind lediglich beispielhafte Ausführungen von Sensorausgestaltungen. Wesentlich ist deren Funktionalität bezüglich einer Gewichtsmessung und/oder der Unwuchtdetektion von Komponenten im Betrieb der Küchenmaschine 1.

Des Weiteren umfasst die Küchenmaschine 1 eine Steuereinheit 10, welche zumindest zum Steuern des Rührwerks der Küchenmaschine 1 ausgebildet ist.

Die Wägeeinrichtung 6 ist multifunktional ausgestaltet und mit ihr kann sowohl eine Gewichtsbestimmung des Behälters und der gegebenenfalls darin enthaltenen Lebensmitteln als auch im Betrieb der Küchenmaschine 1 auftretende Unwuchtinformationen detektiert werden. Insbesondere ist vorgesehen, dass die Sensoren 8 und 9 zu dieser Multifunktionalität ausgebildet sind, wobei die Detektion der Unwuchtinformationen betriebsphasenabhängig erfolgt.

Insbesondere ist der Betrieb der Küchenmaschine 1 so vorgesehen, dass die Wägefunktion und somit die Gewichtsbestimmung bei deaktiviertem Rührwerk aktiv ist und andererseits die Ermittlung von Unwuchtinformationen im aktivierten Betrieb des Rührwerks gegeben ist. Als Unwuchtinformationen können beispielsweise im Betrieb des Rührwerks auftretende Vibrationen des Behälters 7 und/oder hochunsymmetrische Gewichtsverteilungen der Lebensmitteln im Behälter 7 und/oder eine Unwucht des Rührwerks und/oder die Unwucht eines Antriebsmotors des Rührwerks angesehen werden. Beispielsweise dann, wenn in dem Behälter 7 ein Teig geknetet wird, kann aufgrund der Konsistenz am Ende eines Knetvorgangs ein relativ kompakter und relativ schwerer Teigball entstehen, welcher durch das weitere Kneten durch das Rührwerk in seiner Position im Behälter 7 im Hinblick auf die vertikale Längsachse des Behälters 7 stark asymmetrisch dazu positioniert wird. Dies kann durch die Sensoren 8 und 9 bzw. durch die Wägeeinrichtung 6 detektiert werden und dann, wenn unerwünscht hohe Unwuchtinformationen auftreten, kann ein Warnsignal an einen Nutzer abgegeben werden und/oder automatisch die Geschwindigkeit des Rührwerks reduziert werden.

Es kann vorgesehen sein, dass die Sensoren 8 und 9 zur Bestimmung des Gewichts als Drucksensoren ausgebildet sind. Vorzugsweise können auch andere Arten von Sensoren vorgesehen sein.

Selbstverständlich können auch andere Sensoren vorgesehen sein, insbesondere im Hinblick auf die Realisierung der Dualität der Funktionalität mit der Gewichtsbestimmung einerseits und der Bestimmung von Unwuchtinformationen andererseits.

Die in der Figur beispielhaft und skizzenhaft dargestellte Ausgestaltung der Küchenmaschine 1 kann sowohl in Form und Anordnung der einzelnen Komponenten auch von der gezeigten Ausführung abweichen. Wesentlich für die Erfindung ist die Dualität der Funktion der Sensoren der Wägeeinrichtung 6 bzw. der Wägeeinrichtung 6 selbst.

## Patentansprüche

1. Küchenmaschine mit einem mit mehreren Füßen (4, 5) ausgebildeten Basisteil (3), an welchem ein Behälter (7) zur Aufnahme von Lebensmitteln anbringbar ist, und einer Wägeeinrichtung (6) mit mehreren Sensoren (8, 9) zur Gewichtsbestimmung zumindest des Behälters (7), **dadurch gekennzeichnet, dass** die Wägeeinrichtung (6) zumindest in der Phase der Zubereitung des Lebensmittels in dem Behälter (7) zur Erfassung von Unwuchtinformationen zumindest einer Komponente der Küchenmaschine (1) ausgebildet ist.

2. Küchenmaschine nach Anspruch 1, **dadurch gekennzeichnet, dass** als Unwuchtinformation ein Vibrieren des Behälters (7) und/oder eines Antriebsmotors, insbesondere eines Antriebsmotors für ein Rührwerk, bestimmbar ist.

3. Küchenmaschine nach Anspruch 1 oder 2, **dadurch gekennzeichnet, dass** als Unwuchtinformation eine hoch unsymmetrische Gewichtsverteilung des Lebensmittels in dem Behälter (7) bestimmbar ist.

4. Küchenmaschine nach einem der vorhergehenden Ansprüche, **dadurch gekennzeichnet, dass** die Funktion der Bestimmung von Unwuchtinformationen betriebsphasenabhängig aktiviert ist.

5. Küchenmaschine nach Anspruch 4, **dadurch gekennzeichnet, dass** die Funktion der Bestimmung von Unwuchtinformationen im Betrieb eines Rührwerks der Küchenmaschine aktiviert ist.

6. Küchenmaschine nach einem der vorhergehenden Ansprüche **gekennzeichnet durch** eine Steuereinheit, welche derart ausgebildet ist, dass abhängig von einem Überschreiten von Referenzwerten zumindest einer Unwuchtinformation die Drehgeschwindigkeit des Rührwerks, insbesondere die Geschwindigkeit dessen Antriebsmotor, reduziert wird.

7. Küchenmaschine nach einem der vorhergehenden Ansprüche, **gekennzeichnet durch** eine Steuereinheit (10), welche derart ausgebildet ist, dass abhängig von einem Überschreiten von Referenzwerten zumindest einer Unwuchtinformation ein Warnsignal erzeugt wird.

8. Küchenmaschine nach einem der vorhergehenden Ansprüche, **dadurch gekennzeichnet, dass** abhängig von der Zeitdauer, wie lange Referenzwerte zumindest einer Unwuchtinformation überschritten sind, ein Rührwerk durch eine Steuereinheit (10) deaktivierbar ist.

9. Küchenmaschine nach einem der vorhergehenden Ansprüche, **dadurch gekennzeichnet, dass** jeweils ein Sensor (8, 9) jeweils in einem Fuß (4, 5) zumindest bereichsweise angeordnet ist.

10. Küchenmaschine nach einem der vorhergehenden Ansprüche, **dadurch gekennzeichnet, dass** die Sensoren (8, 9) der Wägeeinrichtung (6) zur Detektion des Gewichts des Behälters (7) und zur Detektion der Unwuchtinformationen ausgebildet sind.

11. Küchenmaschine nach einem der vorhergehenden Ansprüche, **dadurch gekennzeichnet, dass** zumindest drei Füße (4, 5) an dem Basisteil (3) angeordnet sind und in jedem Fuß (4, 5) ein Sensor (8, 9) der Wägeeinrichtung (6) angeordnet ist.

12. Verfahren zum Betreiben einer Küchenmaschine (1) mit einem mit mehreren Füßen (4, 5) ausgebildeten Basisteil (3), an welchem ein Behälter (7) zur Aufnahme von Lebensmitteln anbringbar ist, und einer Wägeeinrichtung (6) mit mehreren Sensoren (8, 9) zur Gewichtsbestimmung zumindest des Behälters (7), **dadurch gekennzeichnet, dass** zumindest in der Phase der Zubereitung des Lebensmittels in dem Behälter (7) Unwuchtinformationen zumindest einer Komponente der Küchenmaschine (1) mittels der Wägeeinrichtung (6) erfasst werden.

13. Verfahren nach Anspruch 12, **dadurch gekennzeichnet, dass** die Funktion der Bestimmung von Unwuchtinformationen betriebsphasenabhängig aktiviert wird.

## Claims

1. Food processor with a base part (3), which is constructed with a plurality of feet (4, 5) and on which a vessel (7) for receiving foodstuffs can be mounted, and a weighing device (6) with a plurality of sensors (8, 9) for determination of the weight at least of the vessel (7), **characterised in that** the weighing device (6) is constructed for detecting imbalance data of at least one component of the food processor (1) at least in the phase of processing the foodstuff in the vessel (7).

2. Food processor according to claim 1, **characterised in that** vibration of the vessel (7) and/or of a drive motor, particularly of a drive motor for a stirring mechanism, is determinable as imbalance information.

3. Food processor according to claim 1 or 2, **characterised in that** a highly asymmetrical weight distribution of the foodstuff in the vessel (7) is determinable as imbalance information.

4. Food processor according to any one of the preceding claims, **characterised in that** the function of determination of imbalance data is activated in dependence on operating phase.

5. Food processor according to claim 4, **characterised in that** the function of determination of imbalance data is activated in operation of a stirring mechanism of the food processor.

6. Food processor according to any one of the preceding claims, **characterised by** a control unit which is so constructed that the rotational speed of the stirring mechanism, particularly the speed of the drive motor thereof, is reduced in dependence on exceeding of reference values of at least one item of imbalance information.

7. Food processor according to any one of the preceding claims, **characterised by** a control unit (10) which is so constructed that a warning signal is generated in dependence on exceeding of reference values of at least one item of imbalance information.

8. Food processor according to any one of the preceding claims, **characterised in that** a stirring mechanism is deactivatable by a control unit (10) in dependence on the length of time reference values of at least one item of imbalance information have been exceeded.

9. Food processor according to any one of the preceding claims, **characterised in that** a respective sensor (8, 9) is arranged in at least a region in each foot (4, 5).

10. Food processor according to any one of the preceding claims, **characterised in that** the sensors (8, 9) of the weighing device (6) are constructed for detection of the weight of the vessel (7) and for detection of imbalance data.

11. Food processor according to any one of the preceding claims, **characterised in that** at least three feed (4, 5) are arranged at the base part (3) and a respective sensor (8, 9) of the weighing device (6) is arranged in each foot (4, 5).

12. Method of operating a food processor with a base part (3), which is constructed with a plurality of feet (4, 5) and on which a vessel (7) for receiving foodstuffs can be mounted, and a weighing device (6) with a plurality of sensors (8, 9) for determination of the weight of at least the vessel (7), **characterised in that** imbalance data of at least one component of the food processor (1) are detected by means of the weighing device (6) at least in the phase of processing of the foodstuff in the vessel (7).

13. Method according to claim 12, **characterised in that** the function of determination of imbalance data is activated in dependence on operating phase.

## Revendications

1. Robot ménager comprenant une partie de base (3) conçue avec plusieurs pieds (4, 5), sur laquelle peut être placé un récipient (7) pour le logement de denrées alimentaires, et un dispositif de pesée (6) comprenant plusieurs capteurs (8, 9) pour la détermination du poids au moins du récipient (7), **caractérisé en ce que** le dispositif de pesée (6) est conçu au moins lors de la phase de la préparation de la denrée alimentaire dans le récipient (7) pour l'enregistrement d'informations sur le déséquilibre concernant au moins un composant du robot ménager (1).

2. Robot ménager selon la revendication 1, **caractérisé en ce qu'**une vibration du récipient (7) et/ou d'un moteur d'entraînement, en particulier d'un moteur d'entraînement pour un mélangeur-agitateur, peut être déterminée comme information sur le déséquilibre.

3. Robot ménager selon la revendication 1 ou 2, **caractérisé en ce que**, comme information sur le déséquilibre, on peut déterminer une répartition de poids très dissymétrique de la denrée alimentaire dans le récipient (7).

4. Robot ménager selon l'une des revendications précédentes, **caractérisé en ce que** la fonction de la détermination d'informations sur le déséquilibre est activée en fonction de la phase de service.

5. Robot ménager selon la revendication 4, **caractérisé en ce que** la fonction de la détermination d'informations sur le déséquilibre est activée pendant le fonctionnement d'un mélangeur-agitateur du robot ménager.

6. Robot ménager selon l'une des revendications précédentes, **caractérisé par** une unité de commande, qui est conçue pour que la vitesse de rotation du mélangeur-agitateur, en particulier la vitesse de son moteur d'entraînement, soit réduite en fonction d'un dépassement de valeurs de référence d'au moins une information sur le déséquilibre.

7. Robot ménager selon l'une des revendications précédentes, **caractérisé par** une unité de commande (10), qui est conçue de telle sorte qu'un signal d'avertissement est généré en fonction d'un dépassement de valeurs de référence d'au moins une information sur le déséquilibre.

8. Robot ménager selon l'une des revendications précédentes, **caractérisé en ce qu'**un mélangeur-agitateur peut être désactivé par une unité de commande (10) en fonction de la durée pendant laquelle des valeurs de référence d'au moins une information sur le déséquilibre sont dépassées.

9. Robot ménager selon l'une des revendications précédentes, **caractérisé en ce qu'**à chaque fois un capteur (8, 9) est disposé au moins par endroits à chaque fois dans un pied (4, 5).

10. Robot ménager selon l'une des revendications précédentes, **caractérisé en ce que** les capteurs (8, 9) du dispositif de pesée (6) sont conçus pour la détection du poids du récipient (7) et pour la détection des informations sur le déséquilibre.

11. Robot ménager selon l'une des revendications précédentes, **caractérisé en ce qu'**au moins trois pieds (4, 5) sont disposés sur la partie de base (3) et un capteur (8, 9) du dispositif de pesée (6) est disposé dans chaque pied (4, 5).

12. Procédé pour utiliser un robot ménager (1) comprenant une partie de base (3) conçue avec plusieurs pieds (4, 5), partie sur laquelle peut être placé un récipient (7) pour le logement de denrées alimentaires, et un dispositif de pesée (6) doté de plusieurs capteurs (8, 9) pour la détermination du poids au moins du récipient (7), **caractérisé en ce que**, au moins lors de la phase de la préparation de la denrée alimentaire dans le récipient (7), des informations sur un déséquilibre d'au moins un composant du robot ménager (1) sont enregistrées au moyen du dispositif de pesée (6).

13. Procédé selon la revendication 12, **caractérisé en ce que** la fonction de la détermination d'informations sur le déséquilibre est activée selon la phase de service.
